# EUROPEAN PATENT SPECIFICATION

(11) **EP 0 533 612 B1**
(45) Date of publication and mention of the grant of the patent: **28.11.2001**
(21) Application number: 92500117.4
(22) Date of filing: 17.09.1992
(51) Int. Cl.: D04B 1/24

(54) **Process for knitting a seamless garment on flat knitting machines**
Verfahren zum Stricken von nahtlosen Kleidungstücken an Flachstrickmaschinen
Procédé pour le tricotage d'un revêtement sans ourlets sur métiers à tricoter rectilignes

(30) Priority: 19.09.1991 ES 9102069
(43) Date of publication of application: 24.03.1993
(73) Proprietor: SHIMA SEIKI MANUFACTURING LIMITED, Wakayama, Wakayama (JP)
(72) Inventor: Picaza Azpiroz, José Maria, 08360 Canet de Mar, Barcelona (ES)
(74) Representative: Leale, Robin George

(56) References cited:
- FR-A- 2 353 665
- GB-A- 1 183 574
- GB-A- 2 140 469
- GB-A- 2 183 264
- GB-A- 2 228 750
- JP-A- 60 194 153
- JP-B- 3 051 810
- US-A- 3 685 316
- Knitting Technoloy, David J. Spencer; Pergamon Press 1989, pages 37 and 73;

## Description

The present invention relates to a process for knitting seamless garments on flat knitting machines.

There are basically two types of known processes which are commonly used for obtaining knitted garments on a flat knitting machine.

A first such process consists of knitting on the knitting machine rectangular panels of convenient width and length, which subsequently, when they have been removed from the machine, are cut according to the pattern of each of the component parts of the garment, for example: front, shoulder and sleeve (if the garment is a long sleeved pullover). Next, the components are stitched together, joining conveniently the cut edges in order to produce the final article.

According to a second process, each of the four components is knitted separately on the knitting machine. By varying the number of working needles appropriately in each of the successive knitting courses, components are formed in the appropriate shapes.

With this second process the components do not require the cutting operation to give them their shape since this is already accomplished directly on the knitting machine. However, subsequent assembly operations are required to stitch the edges together as in the first described process.

The main difference between the two processes consists in the considerable saving in material used in the second process, since the wastage in the first case can represent around 30% of the total material knitted.

GB-A-2183264 (equivalent to ES-A-549230) and JP-A-60-194154 relate to systems in which the seaming operation is eliminated. They describe the knitting of a garment complete and assembled in a single operation without seams between the components.

The knitting processes described in these documents comprise a first stage of simultaneously producing in a continuous manner in any type of fabric tubes to form the sleeves and the first part of the body up to the armholes; a second stage of linking the sleeves to the first part of the already knitted body; and a third stage of knitting the second part of the body until the garment is completed. During the production of the main phases (knitting of sleeves and body, linking of the tubes at the beginning of the armhole and knitting of the end tube from the armholes to the neck) it is an essential condition that every needle knitting a stich has another empty "complementary" needle in the opposing needle bed. This allows the shifting of the components on the needle beds by transfer of the stitches inwards or outwards in the fabric.

Said processes allow for the production of garments in a wide variety of fabric structures: single needle bed fabrics, plain stitch and its variants of tuck stitch, tiebacks, intarsia, jacquard, open worked by stitch transfer, Links/Links, etc., and with double needle bed fabrics again in all their various forms.

To achieve the required form of the sleeves, and if necessary of the body, a progressive broadening of the tubes is required, said broadening being achieved by adding, according to the requirements of the sleeve pattern, needles in the inner edges of the tubes, when dealing with the sleeves, and in both edges for the body.

If needles are added directly for each broadening, the typical "open work" effect will be produced when the new needle tries to form its first stitch.

In order to avoid this the method represented in figure 14 is proposed, where there are schematically represented successive knitting courses for avoiding the mentioned open work gaps, and furthermore to configure in this case four lines of columns of stitches joined in the lower edge.

According to the invention there is provided a process of knitting a seamless garment on a flat knitting machine comprising the steps of:-
a) simultaneously knitting the sleeves and a first part of the body up to the armholes, the sleeves and the first part of the body having a rib border;
b) linking the sleeves to the first part of the body to form a single tube; and
c) knitting the single tube and reducing the width of the tube until the garment is completed;
wherein the sleeves are broadened by adding stitches to needles adjacent the inner edges thereof and the first part of the body is broadened by adding stitches to needles adjacent both edges thereof by:
d) forming a tuck stitch inside the outermost stitch of the edge that is to be broadened;
e) moving the needle beds laterally with respect to each other and transferring the tuck stitch to a needle on the opposite bed outside the edge;
f) returning the needle beds to their original position; and
g) forming a new stitch on the needle holding the tuck stitch.

Additionally, the invention enables the production of garments in the style known as "round yoke" in which the width of the tube is reduced by means of a series of successive reductions from each of the outer ends of the tube inwards, thereby forming double stitches, taking each time a smaller number of stitches, the outer dimensions of the garment being determined by the number of times that the series of reductions of columns of stitches are reduced, and by the number of knitting courses between each of the said reductions.

With this process, garments with a characteristic seamless round yoke are obtained. Previously they were only made by hand knitting in England. These garments have been made for a long time and in the prior art industrially produced imitations they are made with at least a seam in one of the shoulders.

In order to produce the ribbing of part (a) of the method, only some of the needles forming stitches in one of the needle beds need have available a complementary empty needle in the opposite needle bed, the thread being transferred between needle beds from one of the needles with stitch to the complementary empty needle, only in the case of the cited needles.

With this peculiarity, the real gap between the columns of each side of the tubular rib may be of two empty needles in each needle bed. If as many empty needles were used as there are rib columns in the fabric, the gap between the fabric columns would be of three empty needles in each needle bed. This would result in a more unstable fabric, due to the larger gaps between the rib columns.

Since in practice the body rib as well as the ribs on the sleeves never have width variations, as the initial width is maintained along all the rib fabric, it is not necessary that the condition required by Spanish patent 549230 is met for the rest of the garment. That condition is that every needle knitting a stitch has to have an empty complementary needle in the other needle bed.

On the other hand, when the courses necessary for the beginning of the first part of the body and the sleeves have been finished, some very precisely determined transfers of stitches may be carried out so that the knitting of the body and sleeves can be carried out, with the necessary condition that every needle knitting stitch has afterwards an empty complementary needle in the other needle bed.

Thus, it is possible to achieve the same doubling effect universally used in rib fabrics for decreased garments knitted by Cotton machines, being in this manner better matched rib fabric and the subsequent fabric of the body and sleeves.

In a preferred embodiment, in order to broaden the tubes produced during the first phase of the process of the mentioned patent, needles are added in the inner edges of the tubes in the case of sleeves, and in both edges in the case of the first part of the body.

In accordance with the invention, successive special knitting courses are used in order to avoid the open work gaps which would be produced in the broadening of the tubes, by merely adding empty needles in operation.

For a better understanding of the above description, the attached drawings illustrate, schematically, and by way of example only, a practical embodiment of the invention. In said drawings:
Figure 1 represents a garment produced according to the process of the invention;
Figure 2 represents the sleeves and the body in the knitting phase in which the tubes have reached their appropriate size in length and breadth up to the armhole;
Figure 3 shows the three tubes joined together by the process of juxtaposition;
Figure 4 indicates how both needle beds of the machine operate to produce garments with fabric based in one needle bed, in tube (plain stitch);
Figure 5 indicates how both needle beds of the machine operate for producing garments with fabric based in two needle beds, in tube;
Figure 6 represents width reductions by successive transfers of stitches inwards to the stitches of each of the outer edges of the final tube of the garment corresponding to the upper part of the body;
Figures 7, 8, 9 and 12 show some of the different garment styles which may be obtained by appropriately combining the width reductions of the tube of the upper part of the body.
Figure 10 indicates the succession of phases (from A to O) to obtain the start ribbing of the sleeves and body also in tube and with a final doubling of stitches in order to continue with the sleeves and body proper;
figure 11 shows the sequence of juxtaposition and linking of the three tubes in order to pass from the embodiment of figure 2 to the embodiment of figure 3;
figure 13 represents the sequences needed to obtain the so called "round yoke" represented in figure 12;
and figure 14 represents a sequence in accordance with the invention used for enlarging the fabric, with the particular feature that the gap (open work) produced in commencing the formation of stitches is covered by means of empty needles.

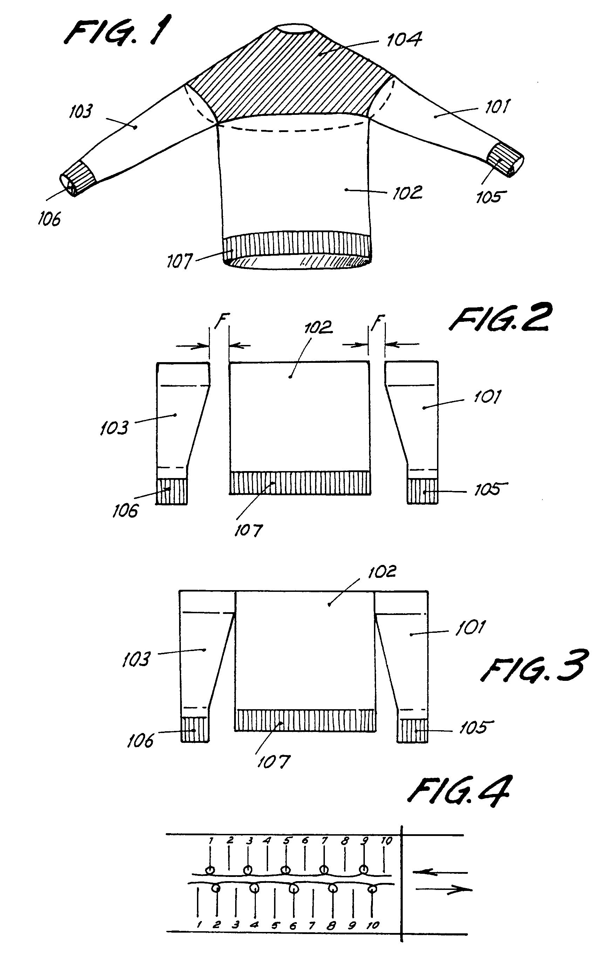

In figure 1 four regions can be distinguished in the garment. The regions -101, 102, 103 - are three independent tubes of fabric corresponding to the left sleeve -101-, to the body front and shoulder -102- and to the right sleeve -103-. The region -104- is a sole conic tube resulting from the juxtaposition at the start of the armhole of the tubes -101, 102, 103- and constituting the part of the garment which corresponds to the armholes, shoulders and neck.

In the process of knitting seamless garments on flat knitting machines the three tubes -101, 102, 103- are knitted in three different parts of the needle beds using different yarn guides for each tube so that each tube may be separately obtained with the appropriate width and length. This is possible by increasing the number of working needles when each tube has to be broadened, or by keeping the number of needles of one tube unaltered if there is no change required.

In figure 2 it is possible to view the distribution of the tubes in the machine during the knitting of these components to the point where the corresponding sleeve and body lengths have been produced up to the start of the armholes, and the spaces "F" of inactive needles, whose number is variable can be noted.

Since each of the tubes is independent from the others the sleeve and body lengths up to the armholes may be different. This being the case it is possible to knit a given number of courses of the sleeve tubes -101, 103- while stopping the knitting of the body tube -102-, if the sleeves need to be larger than the body, or alternatively the body -102- may be knitted without knitting the sleeves -101, 103-, if the body needs to be longer than the sleeves. In the case where the length of the three tubes -101, 102, 103- are equal, all three tubes are knitted simultaneously.

When the three tubes -101, 102, 103- have reached their length and breadth measurements up to the start of the armholes the linking operation may be carried out by means of the process described in the mentioned Spanish Patent No. 549230 and detailed below, continuing the knitting in a single conic tube -104- in order to configure the armholes and shoulders by means of appropriate reductions in the working needles until the full length of the garment is achieved in the region defining the neck.

At this point the process of knitting the garment comes to an end, and on evacuating the garment from the machine it only remains to add the necessary complements according to the form of neck (round, pointed, swan, cardigan etc.) and the finishing operations (ironing, softening etc.) that needs to be given to the garment.

The process consists essentially in always working on the two needle beds, knitting with needles which have each available a complementary empty needle in the opposite needle bed, a feature which will make feasible the production of the initial ribbing of the three tubes, and the stitch transfers of as many stitches as are being worked, in any region of knitting and at any time.

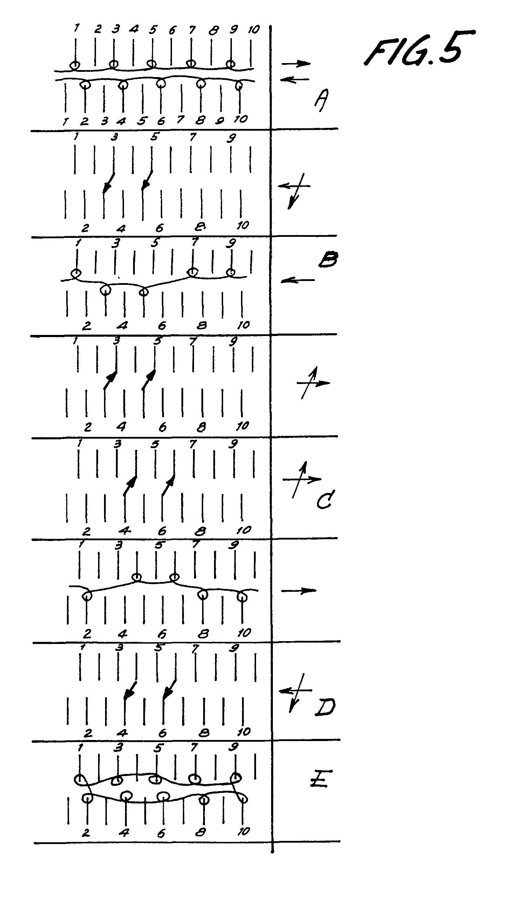

Figures 4 and 5 clarify this essential condition of the process. In these figures a very limited number of needles is represented, in relation with the number actually used in the real knitting process, but it may be considered sufficiently representative.

Below is shown the representational code for the different working structures on flat knitting machines during different phases of the process:
A 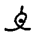 Back stitch
B 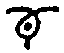 Front stitch
C 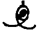 Back doubled stitch
D 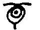 Front doubled stitch
E 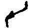 Stitch transfer from rear to front
F 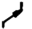 Stitch transfer from front to rear
G 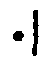 Initial variator position (back bed)
H 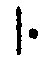 Variator towards the right (back bed)
I 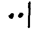 Variator towards the left (back bed)

The points indicating displacements of the variator in G, H or I indicate the number of steps carried out and the position in each case of the back needle bed with respect to the front needle bed.

In the group of ten needles of the back and front needle beds represented in figure 4, it can be seen that if the knitting is carried out with the odd back needles in one carriage course and with the even front needles in the following course, a tube fabric results in which the even back needles remain empty and are complementary to the even needles in the front needle bed. Inversely, in the front needle bed, the odd needles remaining empty are complementary to the odd needles knitting back stitches.

Under these conditions a fabric is obtained with a single needle bed structure on each side of the tube.

Proceeding as indicated in figure 5, following the courses A-B-C-D the result shown in E is obtained, namely a fabric in the form of a tube and with a two needle bed structure on each side of the tube, in which the back stitches 1, 7 and 9 are plain while the stitches 3 and 5 are purl in the same back fabric, just as the stitches 2, 8 and 10 in the front fabric are plain while stitches 4 and 6 are purl in the front fabric.

This same working principle allows for reductions in the width of the fabric at any stage of the process with complete freedom of choice concerning the number of columns of stitches transferred inwards of the fabric, in any of the needle beds and in any of the sides of the fabric.

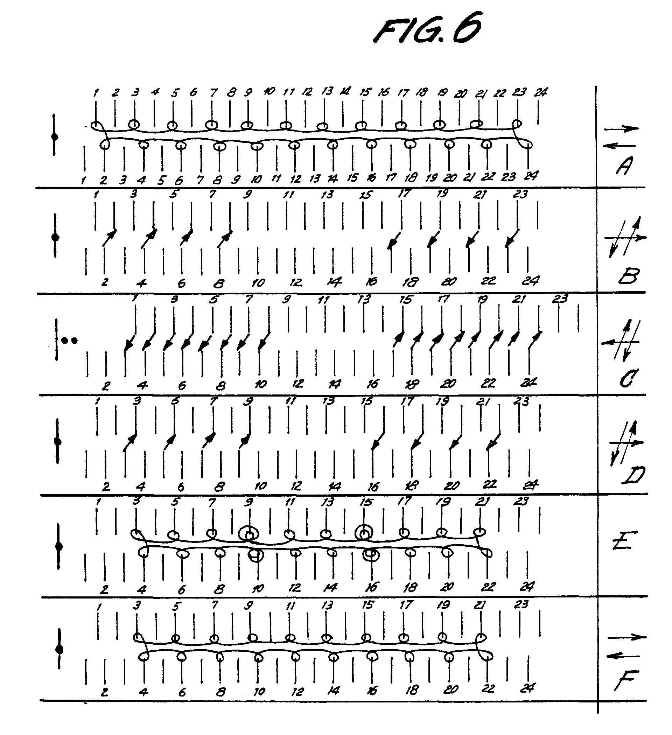

Figure 6 details the process required for reducing the working width which enables the forming of the garment.

Phase A represents the last knitting course immediately prior to the reduction of the width of the fabric.

In the example the fabrics of the two needle beds have the structure of a single needle bed fabric. The same process of reduction can be carried out with an identical sequence beginning with a two needle bed structure, as shown in phase E of figure 5. Returning to figure 6, in phase B the back stitches 17, 19, 21 and 23 are transferred from the back towards the front, while the stitches 2, 4, 6 and 8 of the front needles are transferred from the front towards the back. These groups of needles selected can be varied in number without producing any other change in the fabric than the position in it of the marks of stitch doubling.

In phase C, having previously variated the back needle bed two steps to the left, the back stitches of the needles 1, 2, 3, 4, 5, 6, 7 and 8 are transferred from the back to the front, and those of needles 17, 18, 19, 20, 21, 22, 23 and 24 from the front to the back.

In phase D, by using the variator to again move the back needle bed two steps to the left, and by transferring the stitches of the needles 16, 18, 20 and 22 from the back towards the front and the stitches of the needles 3, 5, 7 and 9 from the front towards the back, the outcome, shown in phase E, is that the needles 1 and 23 of the back needle bed as well as the needles 2 and 24 of the front needle bed become empty, the marks of stitch doubling being produced by doubling of the stitches existing in the back needles 9 and 15 and in the front ones 10 and 16, leaving in the fabric the typical marks of decrease.

After this, knitting can continue as represented in phase F, with the width of the fabric reduced.

The number of reduced needles in each outer edge of the fabric can be 1, 2, 3 or more active needles with stitch in a single decreasing operation in each outer end of the tube and in each needle bed, if the same process of reductions is used, as desired, by simply increasing or decreasing the number of variation steps of the needle bed in the various courses of stitch transfer.

According to the frequency with which the decreases are carried out in relation to the number of courses between each reduction and the number of needles transferred in each reduction, on one hand the cone form and on the other hand, due to the stitch doubling marks produced, the "style" of the garment, are configured.

If two or more successive reductions are carried out using in each case the same number of transferred needles, then, visually speaking, the part of the garment reduced will be the front and the back, the width of the sleeves remaining constant.

If, in contrast, in successive reductions the number of needles transferred is decreased, withdrawing from the number of needles subsequently transferred the needles emptied in the earlier decrease, the width of the front and back is not modified, whilst the breadth of the sleeves is reduced.

Combining these possibilities, each component marked out in the garment by the "doubled" stitches acquires its visual "profile", similar to that obtained in separate panel fabrics knitted in fully/fashion.

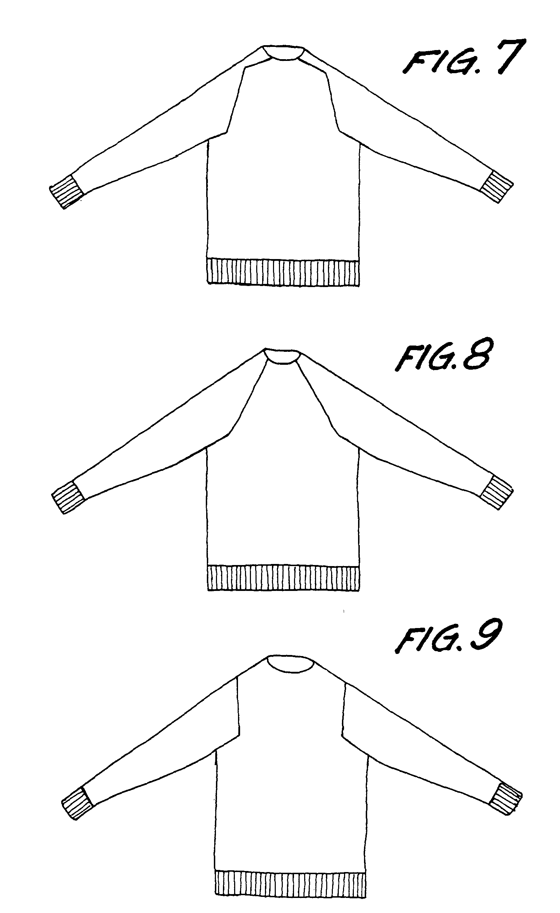

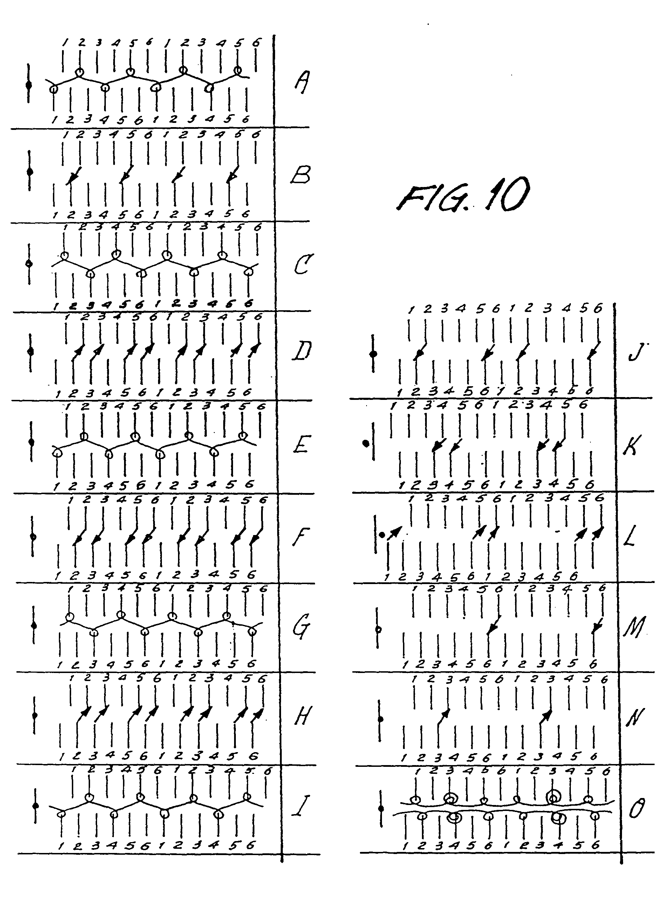

Figures 7, 8, and 9 show examples of these "styles".

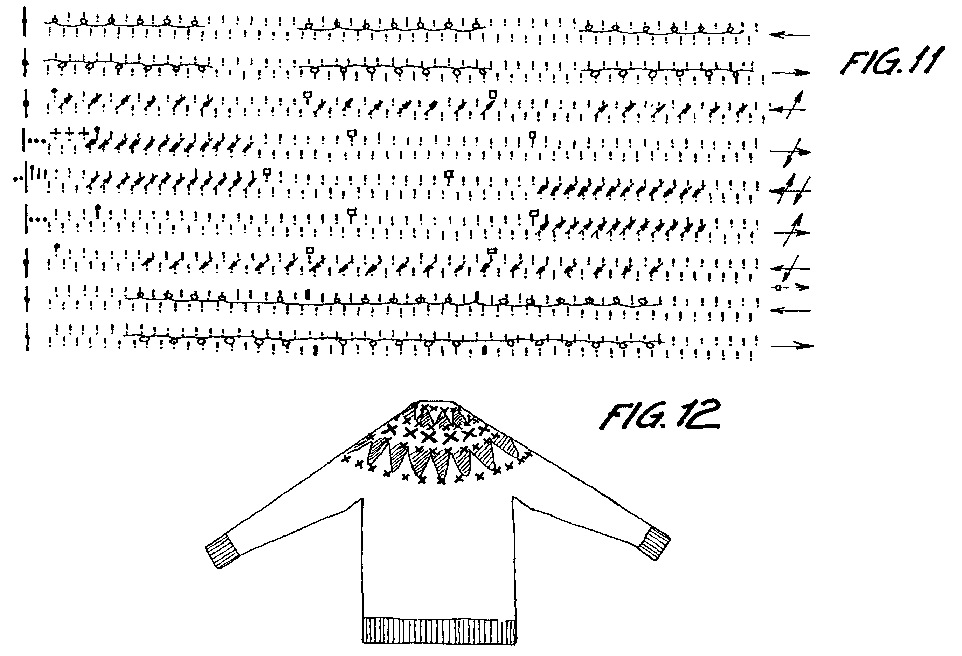

To start the tubes 1,2 and 3 of figure 2 which will configure the sleeves and the body, it is necessary to produce what is known as "ribbing" -105, 106, 107- in each of the tubes, starting in perfect selvage and with a two needle bed structure, which normally presents a ribbing "1x1" or "2x2" as most common. Figure 10 shows the different phases necessary for producing seamless tube ribbing with 1x1 base fabric, according to the previously described principle.

The sequence shows groups of needles numbered from 1 to 6, based on width, in each of the needle beds.

It should be noted that this phase of elaboration of the ribbing is the only one in which it is not necessary for "all" the needles forming stitch to have available another complementary empty needle in the opposite needle bed. It is sufficient that some of them (in the example those numbered 2 and 5 in the front, and 3 and 6 in the rear) obey this condition, since the needles 1 and 4 in the front and the same 1 and 4 in the rear do not need to transfer their stitches during the knitting of the tube, and on the other hand the tubes of the ribbing -105, 106, 107- always have to maintain the same initial width of tube until the sleeve and body proper commence.

In figure 10 the sequence comprised between A and I is the one used for knitting the "ribbing".

Courses A, B and C constitute the selvages of the ribbing, where A is the fabric of the rear part of the tubes, and C that of the front part. Repeating in cycles the operation F-G-H-I as many times as necessary, the desired length of the ribbing is obtained, with the edges of the two faces perfectly sealed and seamless.

The following sequence, J-K-L-M-N, allows the redistribution of the stitches and needles used in the ribbing, thus reaching the distribution which can be viewed in "O", in which can be observed a characteristic resulting from this specific process, according to which the stitches of the needles numbered 3 in the rear and 4 in the front have their stitches "doubled" (by doubling), similar to the technique used in the ribbing applied to the fabrics knitted on Cotton technology machines, with the difference that those produced in the process currently being claimed for are knitted in the form of a closed tube, while those of the Cotton technology are knitted in flat fabric which is subsequently closed, using seaming, in the form of a tube.

In the same way, in phase O it can be observed that the odd needles of the rear needle bed are provided with stitch and have available, by ways of complementary needles, the odd needles in the front needle bed, which do not have stitch, and similarly the even needles in the front needle bed having stitch have available, by ways of complementary needles, the empty even needles in the rear needle bed, as is the indispensable condition for carrying out the subsequent phases of the process up to the completion of the garment.

To achieve the required form of the sleeves, and if necessary of the body, a progressive broadening of the tubes is required, said broadening being achieved by adding, according to the requirements of the sleeve pattern, needles in the inner edges of the tubes, when dealing with the sleeves, and in both edges for the body.

If needles are added directly for each broadening, the typical "open work" effect will be produced when the new needle tries to form its first stitch.

In order to avoid this, the method represented in figure 14 is proposed, where there are schematically represented successive knitting courses for avoiding the mentioned open work gaps, and furthermore to configure in this case four lines of columns of stitches joined in the lower edge.

Figure 14 represents the sequence used for the left sleeve.

For the right sleeve the sequence is similar to the left one, applying the same technique to the inner edge of the right tube.

For the body the sequences will be equal to that of the right sleeve on the left edge and on the right edge equal to that for the left sleeve.

Once the length and width of the three tubes have been completed the juxtaposition and assembly of the contiguous edges of the three tubes is necessary, in order to follow the process in normal conditions.

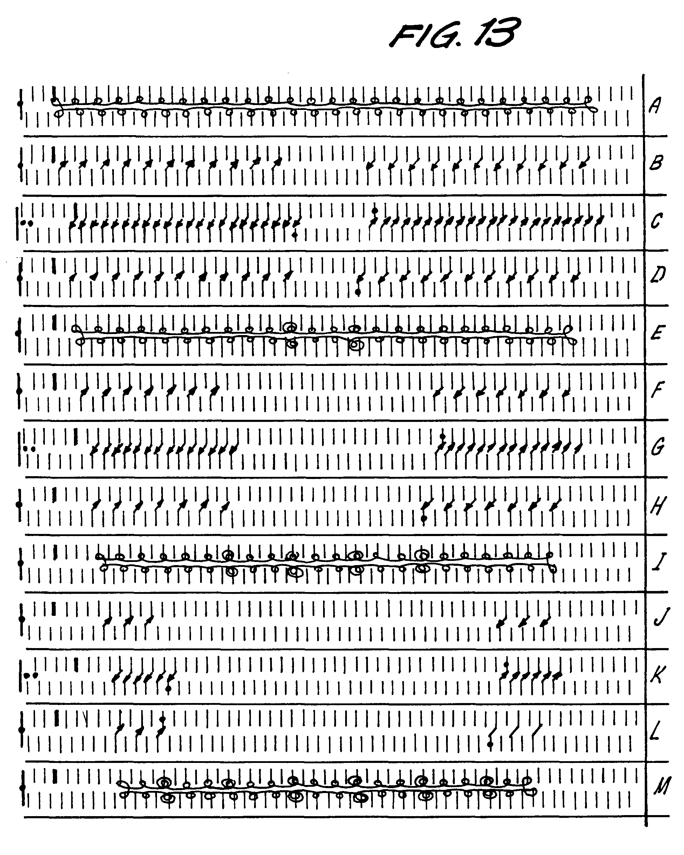

In figure 11 the sequence required for the juxtaposition and linking of the body and sleeve tubes is shown, these are carried out when the desired dimensions from the ribbing to the beginning of the armholes have been achieved.

The separation of the idle needles "F" of figure 2, between the tubes, can involve a greater or smaller number of needles. If the separation was greater than that indicated in figure 11, successive repetitions of the joining process with appropriate variations of needle bed will bring about the same result.

These spacing differences prior to the linking of the tubes in order to continue with the single final tube which configures the armholes and the shoulders of the garment are determined by the gauge of the machine and by the spaces required for the correct operation of the yarn guides knitting each of the tubes. Whatever the circumstances, the distance can be variable always so long as the minimum necessary for the good operation of the yarn guides is respected.

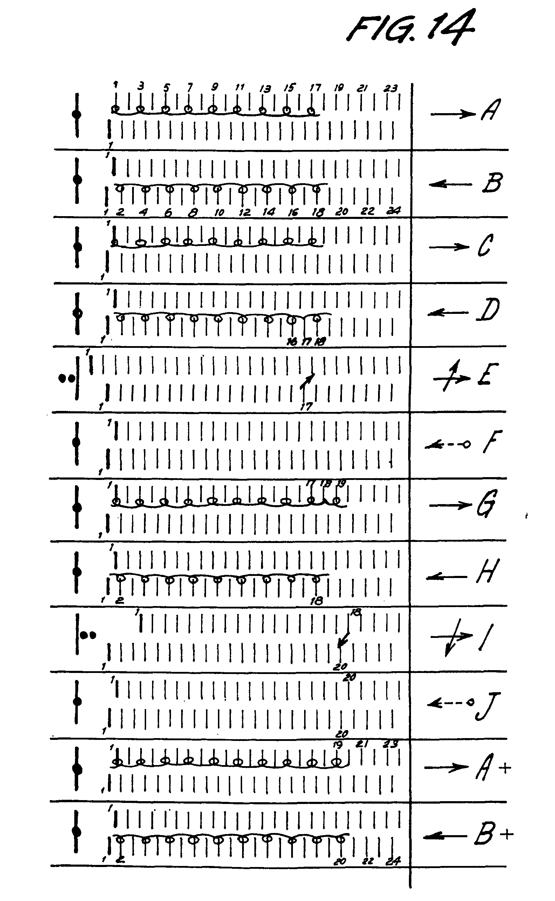

Figure 13 shows a sequence of decreases for the production of garments known as "round yoke", which up to now could only be produced seamlessly by hand knitting, or in automatic knitting machines with at least one side seam in the yoke, and requiring in a subsequent process the mounting of the yoke on the rest of the garment.

In figure 12 a diagram for one of these "round yoke" garments is illustrated.

In order to execute the yoke the whole width of the tube needs to be reduced intermittently, this being possible with successive reductions from each of the outer ends of the tube inwards, taking each time a smaller number of needles, with the object of, on one hand, achieving a harmonious distribution of the stitches doubled in each reduction, and, on the other hand, obtaining as many reductions of columns of stitches in each decrease sequence as times the rhythm of each one of these decreases is repeated.

Thus, between two knitting courses it is possible to reduce the working width of as many columns of stitches as desired.

The number of times that the reductions following the description of figure 13 are repeated, and the number of knitting courses between each one of these sequences of column stitch reduction, determine the outer dimensions of the round yoke.

In figure 12 the "x" represent the columns which have been doubled in a single course, the vertical gaps between these indications being the space of tube fabric without decreases.

## Claims

1. A process of knitting a seamless garment on a flat knitting machine comprising the steps of:-
a) simultaneously knitting the sleeves (101,103) and a first part of the body (102) up to the armholes, the sleeves and the first part of the body having a rib border (105,106,107);
b) linking the sleeves (101,103) to the first part of the body (102) to form a single tube; and
c) knitting the single tube (104) and reducing the width of the tube until the garment is completed;
**characterised in that** the sleeves are broadened by adding stitches to needles adjacent the inner edges thereof and the first part of the body is broadened by adding stitches to needles adjacent both edges thereof by:
d) forming a tuck stitch inside the outermost stitch of the edge that is to be broadened;
e) moving the needle beds laterally with respect to each other and transferring the tuck stitch to a needle on the opposite bed outside the edge;
f) returning the needle beds to their original position; and
g) forming a new stitch on the needle holding the tuck stitch.

2. A process as claimed in claim 1 wherein, in order to produce a garment having a round yoke, step (c) comprises:
h) transferring stitches between needle beds such that all the stitches of a left-most part of the garment are on one needle bed and all the stitches of a right-most part of the garment are on the opposite needle bed;
i) moving the needle beds laterally with respect to each other to bring the left-most and right-most parts closer to the centre of the garment;
j) transferring all the stitches of the left-most part and the right-most part to the opposite needle beds to provide a double stitch on the front bed and a double stitch on the rear bed;
k) moving the needle beds back to their previous relative position;
l) transferring only stitches of the left-most part and the right-most part which have not been transferred in step (h) to the opposite needle beds to provide a further double stitch on the rear bed and a further double stitch on the front bed and also to reduce the number of stitches of the single tube (104) by four;
m) repeating steps (h) to (l) with smaller left-most and right-most parts in order to produce a further four double stitches, two on the front bed and two on the rear bed, each outside those already produced by a previous step; and
n) knitting the single tube (104) having the reduced number of stitches and repeating steps (h) to (m).

3. A process as claimed in claim 2, wherein steps (h) to (l) are applied to a plurality of courses, the spacing between such courses being determined by the desired outer dimensions of the round yoke.

4. A process as claimed in claim 1, 2 or 3, wherein the ribbing is produced by providing complementary needles opposite only some needles carrying stitches, the process comprising transferring stitches from needles carrying stitches to the complementary needles.

5. A process as claimed in any preceding claim, wherein the broadening process is repeated on the opposite needle bed.

## Patentansprüche

1. Verfahren zum Stricken eines nahtlosen Kleidungsstücks auf einer Flachstrickmaschine, welches die folgenden Schritte umfasst: -
a) gleichzeitiges Stricken der Ärmer (101, 103) und eines ersten Teils des Vorder- und Rückenteils (102) bis zu den Armausschnitten, wobei die Ärmer und der erste Teil des Vorder- und Rückenteils eine Rippenkante (105, 106, 107) aufweisen;
b) Verbinden der Ärmer (101, 103) mit dem ersten Teil des Vorder- und Rückenteils (102) zur Bildung eines einzigen Schlauchteils; und
c) Stricken des einzigen Schlauchteils (104) und Verringern der Breite des Schlauchteils bis zur Fertigstellung des Kleidungsstücks;
**dadurch gekennzeichnet, dass** die Ärmel durch Aufnehmen zusätzlicher Maschen auf Nadeln nahe der Innenkanten derselben verbreitert werden und dass der erste Teil des Vorder- und Rückenteils durch Aufnehmen zusätzlicher Maschen auf Nadeln nahe dessen beider Kanten verbreitert wird, indem:
d) Bilden einer Fangmasche innerhalb der äußersten Masche an der zu verbreiternden Kante;
e) Bewegen der Nadelbetten seitlich bezüglich zueinander und Überheben der Fangmasche auf eine Nadel auf dem gegenüberliegenden Bett außerhalb der Kante;
f) Rückführen der Nadelbetten in ihre ursprüngliche Position; und
g) Bilden einer neuen Masche auf der Nadel, weiche die Fangmasche hält.

2. Verfahren nach Anspruch 1, bei welchem zur Herstellung eines Kleidungsstücks mit einer runden Passe der Arbeitsschritt (c) folgendes umfasst:
h) Umsetzen von Maschen zwischen Nadelbetten in der Weise, dass sich alle Maschen eines am weitesten links liegenden Teils des Kleidungsstücks auf einem Nadelbett befinden und sich alle Maschen eines am weitesten rechts linkenden Teils des Kleidungsstücks auf dem gegenüberliegenden Nadelbett befinden;
i) seitliches Bewegen der Nadelbetten bezüglich zueinander um die am weitesten rechts und am weitesten links liegenden Teile näher zur Mitte des Kleidungsstücks hin zu bewegen;
j) Umsetzen aller Maschen des am weitesten links liegenden Teils und des am weitesten rechts linkenden Teils auf die gegenüberliegenden Nadelbetten zur Bildung einer Doppelmasche auf dem vorderen Nadelbett und zur Bildung einer Doppelmasche auf dem hinteren Nadelbett;
k) Bewegen der Nadelbetten zurück in ihre vorhergehende relative Position;
l) Umsetzen nur der Maschen des am weitesten links liegenden Teils und des am weitesten rechts linkenden Teils, die in Schritt h) nicht auf die gegenüberliegenden Nadelbetten umgesetzt wurden, um eine weitere Doppelmasche auf dem hinteren Nadelbett zu bilden und um eine weitere Doppelmasche auf dem vorderen Nadelbett zu bilden, und auch um die Anzahl der Maschen des einzigen Schlauchgestricks um vier zu verringern;
m) Wiederholen der Schritte h) bis l) mit kleineren am weitesten links und am weitesten rechts linkenden Teilen, um weitere vier Doppelmaschen zu bilden, und zwar auf dem vorderen Nadelbett und zwei auf dem hinteren Nadelbett, wobei diese jeweils außerhalb der in einem vorhergehenden Schritt bereits gebildeten Maschen liegen; und
n) Stricken des einzigen Schlauchgestricks (104) mit der verringerten Maschenanzahl und Wiederholen der Schritte h) bis m).

3. Verfahren nach Anspruch 2, bei welchem die Schritte h) bis l) bei einer Vielzahl von Maschenreihen eingesetzt werden, wobei der Abstand zwischen diesen Maschenreihen durch die gewünschten äußeren Abmessungen der runden Passe bestimmt wird.

4. Verfahren nach Anspruch 1, 2 oder 3, bei welchem die Rippenbildung dadurch herbeigeführt wird, dass komplementäre Nadeln gegenüber nur einigen Nadeln vorgesehen werden, welche Maschen tragen, wobei das Verfahren den Schritt der Umsetzung von Maschen von Nadeln, welche Maschen tragen, auf die komplementären Nadeln umfasst.

5. Verfahren nach einem der vorhergehenden Ansprüche, bei welchem der Vorgang der Verbreiterung auf dem gegenüberliegenden Nadelbett wiederholt wird.

## Revendications

1. Procédé pour tricoter un vêtement sans ourlet dans un métier à tricoter rectiligne, comprenant les étapes consistant à :
a) tricoter simultanément les manches (101,103) et une première partie du corps (102) jusqu'aux ouvertures pour les bras, les manches et la première partie du corps possédant une bordure à côtes (105,106,107);
b) relier les manches (101,103) à la première partie du corps (102) pour former un tube unique; et
c) tricoter le tube unique (104) et réduire la largeur du tube jusqu'à ce que le vêtement soit terminé;
**caractérisé en ce que** les manches sont élargies par l'addition de mailles à des aiguilles adjacentes aux bords intérieurs des manches, et que la première partie du corps est élargie par l'addition de mailles à des aiguilles adjacentes aux deux bords du corps, par :
d) former une maille chargée à l'intérieur de la maille la plus extérieure du bord qui doit être élargi;
e) déplacer les fontures latéralement l'une par rapport à l'autre et transférer la maille chargée à une aiguille située sur la fonture opposée à l'extérieur du bord;
f) ramener les fontures dans leur position initiale; et
g) former une nouvelle maille sur l'aiguille retenant la maille chargée.

2. Procédé selon la revendication 1, selon lequel, pour produire un vêtement possédant un empiècement circulaire, l'étape c) comprend :
h) transférer des mailles entre les fontures de telle sorte que toutes les mailles d'une partie la plus à gauche du vêtement soient situées sur une fonture et que toutes les mailles de la partie la plus à droite du vêtement soient situées sur la fonture opposée;
i) déplacer les fontures latéralement l'une par rapport à l'autre de manière à rapprocher du centre du vêtement la partie la plus à gauche et la partie la plus à droite;
j) transférer toutes les mailles de la partie la plus à gauche et de la partie la plus à droite jusqu'aux fontures opposées de manière à former une maille double sur la fonture avant et une maille double sur la fonture arrière;
k) faire reculer les fontures pour les amener dans leur position relative précédente;
l) transférer uniquement des mailles de la partie la plus à gauche et de la partie la plus à droite, qui n'ont pas été transférées lors de l'étape h) jusqu'aux fontures opposées pour former une double maille supplémentaire sur la fonture arrière et une double maille supplémentaire sur la fonture avant et également pour réduire de quatre le nombre de mailles du tube unique (104);
m) répéter les étapes (h) à (l) avec les plus petites parties la plus à gauche et la plus à droite pour produire quatre mailles doubles supplémentaires, deux sur la fonture avant et deux sur la fonture arrière, chacune à l'extérieur de celle déjà produite lors d'une étape précédente; et
n) tricoter le tube unique (104) possédant le nombre réduit de mailles et répéter les étapes (h) à (m).

3. Procédé selon la revendication 2, selon lequel les étapes (h) à (l) sont exécutés suivant une pluralité de courses, l'espacement entre de telles courses étant déterminé par les dimensions extérieures désirées de l'empiècement circulaire.

4. Procédé selon la revendication 1, 2 ou 3, selon lequel le nervurage est obtenu par l'utilisation d'aiguilles complémentaires situées à l'opposé uniquement de certaines aiguilles partant des mailles, le procédé comprenant le transfert de mailles depuis des aiguilles partant des mailles aux aiguilles complémentaires.

5. Procédé selon l'une quelconque des revendications précédentes, selon lequel le procédé d'élargissement est répété sur la fonture opposée.
